# DEMANDE DE BREVET EUROPEEN

(11) **EP 3 843 016 A1**
(43) Date de publication de la demande: **30.06.2021**
(21) Numéro de dépôt: 20206689.0
(22) Date de dépôt: 10.11.2020
(51) Int. Cl.: G06N 5/04, G06N 5/02, G06F 17/18, G06F 16/335

(54) **PROCÉDÉ DE CRIBLAGE DE DONNÉES MIS EN OEUVRE PAR ORDINATEUR**

(30) Priorité: 23.12.2019 FR 1915395
(71) Demandeur: Commissariat à l'Energie Atomique et aux Energies Alternatives, 75015 Paris (FR)
(72) Inventeur: POLI, Jean-Philippe, 91191 Gif-sur-Yvette Cedex (FR); BOUDET, Laurence, 91191 Gif-sur-Yvette Cedex (FR); CORNEZ, Laurence, 91191 Gif-sur-Yvette Cedex (FR); FRIEDMANN, Edwin, 91191 Gif-sur-Yvette Cedex (FR)
(74) Mandataire: Marks & Clerk France

(57) **Abrégé**

Procédé de criblage de données mis en œuvre par ordinateur comprenant les étapes consistant à :
- effectuer une mise en forme (1) des données d'une source de données à cribler (2) au moyen d'un accesseur sémantique, sous une forme exploitable par un moteur d'inférence et/ou un solveur ;
- effectuer un criblage (3) des données mises en forme (2) par l'accesseur sémantique au moyen du moteur d'inférence et/ou du solveur à partir d'une base de connaissances (4) comprenant des règles et/ou des contraintes basées sur la logique floue ; et
- délivrer en sortie (5) les résultats du criblage (5a) et une explication (5b) des résultats ;
dans lequel la base de connaissances (4) comprenant des règles et/ou des contraintes est réalisée constituée à partir d'une source de données étiquetées (7).

## Description

L'invention porte sur un procédé de criblage de données mis en œuvre par ordinateur.

Le criblage désigne l'activité qui consiste à passer au crible des données, dans un but de sélection, classement, notation, comparaison, tri, etc.

Il est connu l'application Trulioo disponible sur le lien https://www.trulioo.com/blog/kyc/#cip, qui est un agrégateur d'information qui permet de trouver, pour un individu donné, l'ensemble des informations le concernant disponibles et qui attribue une note à l'individu. Les informations disponibles peuvent être, pour un particulier, le nom, le prénom, l'adresse, le compte bancaire, le numéro de téléphone, etc. ; et pour une société, des informations de type Kbis, la situation budgétaire, l'identification de personnes morales, etc. Ces données agrégées sont disponibles plus ou moins partiellement selon la juridiction (pays) et proviennent de bases des données variées telles que les bases de données gouvernementales, centres de financement, etc. Selon ces informations, un score est attribué automatiquement par l'application, représentatif de la validation de l'identité ou de la solvabilité de l'individu selon la manière dont est employée l'application. Cette note est calculée selon une formule qui est propre au cas d'application.

Ce logiciel n'est pas général, c'est-à-dire qu'il ne peut qu'agréger des informations sur un prospect et donner une évaluation. Il n'est pas personnalisable par l'utilisateur, c'est-à-dire qu'il ne peut pas être utilisé dans un autre but que la solvabilité des clients et que son comportement est borné par des règles préétablies. Le processus d'évaluation de la solvabilité est un algorithme qui n'est pas totalement ouvert à l'utilisateur. Il ne peut configurer que partiellement le raisonnement de l'application et il ne connaît pas non plus le processus exact de calcul de la solvabilité. En outre, il ne fournit pas d'explications textuelles sur les résultats fournis. L'application utilise une règle contenant des variables linguistiques catégorielles.

Il est également connu l'application disponible sur le lien https://www.treasury.gov/resource-center/sanctions/SDN-List/Pages/fuzzy_logic.aspx, qui utilise la logique floue uniquement sur le nom pour comparer des individus au lieu d'appliquer la logique floue aux autres critères liés aux individus.

Ce logiciel ne permet pas de lui fournir des informations imprécises comme des mois et année de naissance ou des plages de dates au lieu de la vraie date.

Il est également connu les documents "Fuzzy Screening Systems" de Yager et "On Fuzzy Screening Systems" de Carlson et Fuller portent sur des méthodes sans génération d'explication, et sans apprentissage. Les auteurs proposent des méthodes permettant d'avoir l'avis de plusieurs experts et de les fusionner.

Il est également connu le document US7020651 B2, "Similarity search engine for use with relational databases", qui propose d'utiliser des distances entre les attributs d'une table d'une base de données et un élément de référence. Il s'agit donc uniquement de comparaisons.

Un but de l'invention est de pallier les problèmes précédemment cités, et notamment de proposer un procédé de criblage dont le comportement est complètement personnalisable, tant au niveau de l'application que de l'utilisation, et qui est capable de générer une justification textuelle de sa décision (un rapport de criblage).

Aussi, il est proposé, selon un aspect de l'invention, un procédé de criblage de données mis en œuvre par ordinateur comprenant les étapes consistant à :
- effectuer une mise en forme des données d'une source de données à cribler au moyen d'un accesseur sémantique, sous une forme exploitable par un moteur d'inférence et/ou un solveur ;
- effectuer un criblage des données mises en forme par l'accesseur sémantique au moyen du moteur d'inférence et/ou du solveur à partir d'une base de connaissances comprenant des règles et/ou des contraintes basées sur la logique floue ; et
- délivrer en sortie les résultats du criblage et une explication des résultats ;
dans lequel la base de connaissances comprenant des règles et/ou des contraintes est réalisée à partir d'une source de données étiquetées, par les étapes consistant à :
- effectuer un apprentissage de la source de données étiquetées pour ajouter des règles et/ou des contraintes dans la base de connaissances ;
- modifier la base de connaissances pour améliorer les règles et/ou les contraintes de la base de connaissances, par des algorithmes d'optimisation ;
- analyser dynamiquement la base de connaissances pour tester automatiquement la base de connaissances sur des cas de la source de données étiquetées pour tester la base de connaissances et fournir des informations sur les résultats de ces tests à une interface homme-machine à destination d'un concepteur expert ;
- analyser statiquement la base de connaissances pour fournir des recommandations à l'interface homme-machine à destination du concepteur expert ; et
- permettre de modifier si nécessaire la base de connaissances au moyen de l'interface homme-machine par le concepteur expert au vu des résultats de tests et recommandations fournis par lesdites analyses dynamique et/ou statique.

Un tel procédé de criblage est plus flexible, et permet d'utiliser un vocabulaire plus riche grâce aux opérateurs. L'interface graphique permet de saisir les règles et/ou les contraintes plus simplement.

En outre, un tel procédé est totalement paramétrable par des contraintes et/ou des règles. La notion de distance est transparente pour l'utilisateur qui n'utilise que des mots dans des règles et/ou des contraintes : par exemple un opérateur "se prononce comme" calcule une distance phonétique entre deux mots.

Cependant, un utilisateur utilise cet opérateur (qui a la forme d'un bout de phrase) dans une règle au lieu de mettre en place une distance. De plus, les sources de données utilisées ne sont pas forcément des bases de données relationnelles.

L'invention sera mieux comprise à l'étude de quelques modes de réalisation décrits à titre d'exemples nullement limitatifs et illustrés par le dessin annexé sur lequel :

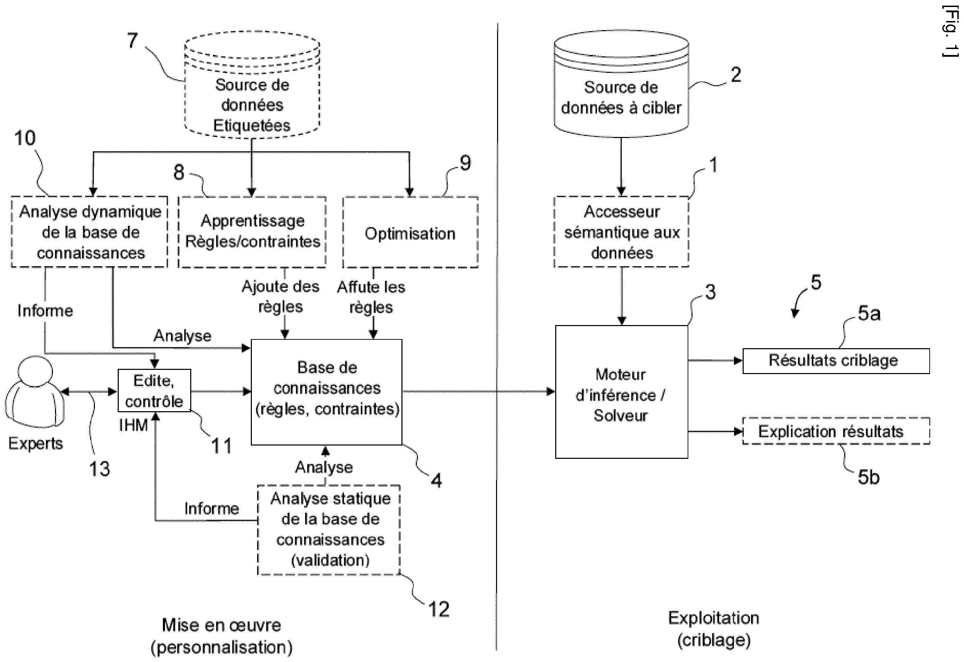

[Fig.1] illustre schématiquement, un procédé de criblage, selon un aspect de l'invention.

Sur la figure 1 est illustré, selon un aspect de l'invention un procédé de criblage de données mis en œuvre par ordinateur comprenant les étapes consistant à :
- effectuer une mise en forme 1 des données d'une source de données à cribler 2 au moyen d'un accesseur sémantique, sous une forme exploitable par un moteur d'inférence et/ou un solveur ;
- effectuer un criblage 3 des données mises en forme 2 par l'accesseur sémantique au moyen du moteur d'inférence et/ou du solveur à partir d'une base de connaissances 4 comprenant des règles et/ou des contraintes basées sur la logique floue ; et
- délivrer 5 en sortie les résultats 5a du criblage et une explication 5b des résultats.

La base de connaissances 4 comprenant des règles et/ou des contraintes est réalisée à partir d'une source de données étiquetées 7, par les étapes consistant à :
- effectuer un apprentissage 8 de la source de données étiquetées 7 pour ajouter des règles et/ou des contraintes dans la base de connaissances 4 ;
- modifier 9 la base de connaissance 4 pour améliorer les règles et/ou les contraintes de la base de connaissances 4, par des algorithmes d'optimisation ;
- analyser dynamiquement 10 la base de connaissances 4 pour tester automatiquement la base de connaissances 4 sur des cas de la source de données étiquetées 7 pour tester la base de connaissances 4 et fournir des informations sur les résultats de ces tests à une interface homme-machine 11 à destination d'un concepteur expert ;
- analyser statiquement 12 la base de connaissances 4 pour fournir des recommandations à l'interface homme-machine 11 à destination du concepteur expert ; et
- permettre de modifier 13 si nécessaire la base de connaissances 4 au moyen de l'interface homme-machine 11 par le concepteur expert au vu des résultats de tests et recommandations fournis par lesdites analyses dynamique 10 et/ou statique 12.

L'étape 1 permet de mettre sous une forme exploitable par un moteur d'inférence et/ou un solveur les données de la source de données à cribler 2, au moyen d'un accesseur sémantique. Un tel accesseur sémantique est par exemple décrit dans le document FR 3078184.

L'étape 3 de criblage des données mises en forme 2 par l'accesseur sémantique est effectuée par le moteur d'inférence et/ou le solveur à partir de la base de connaissances 4 comprenant des règles et/ou des contraintes basées sur la logique floue. Un tel ensemble moteur d'inférence et/ou solveur est par exemple décrit dans le document FR 3028076, qui permet un traitement rapide de données arrivant en flux, ainsi que la parallélisation des tâches d'évaluation, et donc une exécution très rapide d'une base de règles et de contraintes.

La base de connaissance 4 repose notamment sur la logique floue, dans laquelle les propositions ne sont pas seulement vraies ou fausses, mais ont un degré de véracité réel compris entre 0 et 1 (0 pour faux et 1 pour vrai).

L'ensemble moteur d'inférence et/ou solveur est mis en œuvre de manière logicielle sur les machines de l'exploitant du criblage, qui peuvent être différentes des machines utilisées pour la mise en œuvre de la base de connaissances 4. Le moteur d'inférence permet de tirer automatiquement des conclusions depuis des observations tandis que le solveur permet de trouver des valeurs optimales pour répondre à un problème donné.

L'étape 5 délivre en sortie du moteur d'inférence et/ou solveur les résultats 5a du criblage et une explication 5b des résultats. Les résultats 5a du criblage correspondent à un ensemble de décisions au sujet des cas présentés en entrée du criblage, dans la source de données à cribler 2, notamment lors de la phase d'exploitation.

La base de connaissances 4 comprend un ensemble de règles et/ou de contraintes utilisées pour statuer sur les cas présentés en entrée du criblage dans la source de données à cribler 2.

L'étape 8 d'apprentissage de règles et/ou de contraintes à partir de la source de données étiquetées 7 pour les ajouter dans la base de connaissances 4, à partir d'algorithmes tels que par exemple décrit dans "Fuzzy sets in approximate reasoning and information systems" (de Bezdek, Dubois et Prade, 1999) ou encore dans "the research of fuzzy decision trees building based on entropy and the theory of fuzzy sets" (Begenova et Avdeenko, 2018).

L'étape 9 de modification si nécessaire de la base de connaissances 4 pour améliorer les règles et/ou les contraintes de la base de connaissances 4, par des algorithmes d'optimisation, par exemple décrits dans le document FR2992447. Ces algorithmes permettent, à partir des données étiquetées 7, de modifier la base de connaissances 4 de sorte qu'elle maximise son critère de performance (par exemple taux de bonne classification) sur ce jeu de données.

L'étape 10 d'analyse dynamique de la base de connaissances 4 utilise des algorithmes qui permettent de tester la base de connaissances 4 sur des cas étiquetés 7 pour mieux cerner son comportement et vérifier qu'il est conforme à ce qui est attendu. De tels algorithmes sont par exemple décrits dans "Quest for Interpretability-Accuracy Trade-off Supported by Fingrams into the Fuzzy Modeling Tool GUAJE" (Pancho, Alonso, Magdalena, 2013).

Les informations délivrées par l'étape 10 d'analyse dynamique sont transmises à une interface homme-machine 11 à destination d'un concepteur expert.

L'étape 12 d'analyse statique de la base de connaissances 4 est réalisée au moyen d'algorithmes permettant de fournir des recommandations concernant le contenu de la base de connaissances 4, telles des cas manquants, des critères non couverts, des règles antagonistes, etc. De tels algorithmes sont par exemple décrits dans "A synthesis of fuzzy rule-based system vérification" (Viaene, Wets, Vanthienen, 2000).

L'étape 13 de possible modification de la base de connaissances 4 permet à un expert de modifier, si nécessaire, les règles et/ou les contraintes de la base de connaissances 4. Ces modifications sont effectuées par l'intermédiaire d'une interface homme-machine 11 (par exemple), décrite dans le document FR3017474 qui permet de personnaliser le comportement du criblage de manière guidée et aisée.

Le criblage de données selon l'invention peut être appliqué à de nombreux domaines tels :
- criblage de noms de marque : pour vérifier si une marque souhaitée existe déjà dans un domaine similaire : la logique floue apporte tout son sens pour raisonner sur la proximité syntaxique et phonétique de la marque, mais également sur la proximité des domaines ;
- criblage identitaire: pour comparer une identité à celles contenues dans une source de données et trouver les liens entre ces personnes malgré des informations manquantes ou approximatives ;
- criblage de sections de canalisations enterrées : pour passer au crible les données caractéristiques (le type de revêtement par exemple) et d'inspection (données mesurées sur ou à proximité des sections de canalisations enterrées) afin de voir s'ils présentent un risque d'altération au cours du temps (corrosion notamment) ;
- sciences fondamentales, physique des hautes particules : chaque expérience fournit un certain nombre de particules sachant que seules trois d'entre elles sont de vraies particules et non des fausses alarmes. Il s'agit de sélectionner pour chaque expérience trois particules parmi un nombre fini de particules en fonction de critères qui ne sont pas toujours précis ; et
- recommandation de formation : pour sélectionner, parmi un grand choix de formations disponibles, un sous ensemble trié par pertinence en fonction du profil de l'utilisateur.

## Revendications

1. Procédé de criblage de données mis en œuvre par ordinateur comprenant les étapes consistant à :
- effectuer une mise en forme (1) des données d'une source de données à cribler (2) au moyen d'un accesseur sémantique, sous une forme exploitable par un moteur d'inférence et/ou un solveur ;
- effectuer un criblage (3) des données mises en forme (2) par l'accesseur sémantique au moyen du moteur d'inférence et/ou du solveur à partir d'une base de connaissances (4) comprenant des règles et/ou des contraintes basées sur la logique floue ; et
- délivrer en sortie (5) les résultats du criblage (5a) et une explication (5b) des résultats ;
dans lequel la base de connaissances (4) comprenant des règles et/ou des contraintes est réalisée à partir d'une source de données étiquetées (7), par les étapes consistant à :
- effectuer un apprentissage (8) de la source de données étiquetées (7) pour ajouter des règles et/ou des contraintes dans la base de connaissances (4) ;
- modifier (9) la base de connaissance (4) pour améliorer les règles et/ou les contraintes de la base de connaissances (4), par des algorithmes d'optimisation ;
- analyser dynamiquement (10) la base de connaissances (4) pour tester automatiquement la base de connaissances (4) sur des cas de la source de données étiquetées (7) pour tester la base de connaissances (4) et fournir des informations sur les résultats de ces tests à une interface homme-machine (11) à destination d'un concepteur expert ;
- analyser statiquement (12) la base de connaissances pour fournir des recommandations à l'interface homme-machine (11) à destination du concepteur expert ; et
- permettre de modifier (13) si nécessaire la base de connaissances (4) au moyen de l'interface homme-machine (11) par le concepteur expert au vu des résultats de tests et recommandations fournis par lesdites analyses dynamique (10) et/ou statique (12).
